# EUROPEAN PATENT SPECIFICATION

(11) **EP 1 404 071 B1**
(45) Date of publication and mention of the grant of the patent: **28.03.2007**
(21) Application number: 03256155.7
(22) Date of filing: 30.09.2003
(51) Int. Cl.: H04L 12/56

(54) **Rapid channel characterization for bluetooth co-existence**
Schnelle Kanal Kennzeichnung für Bluetooth Koexistenz
Caractérisation rapide d'un canal pour la coexistence de Bluetooth

(30) Priority: 30.09.2002 US 262280
(43) Date of publication of application: 31.03.2004
(73) Proprietor: INTEL CORPORATION, Santa Clara, CA 95052 (US)
(72) Inventor: Durrant, Randolph L., Colorado Springs, Colorado 80920 (US)
(74) Representative: Harrison Goddard Foote

(56) References cited:
- EP-A- 1 187 504
- EP-A- 1 220 499
- US-A- 6 118 805
- MIYAMOTO S ET AL: "A STUDY OF THE EFFECT OF MICROWAVE OVEN INTERFERENCE ON THE PERFORMANCE OF DIGITAL RADIO COMMUNICATIONS SYSTEMS" ELECTRONICS & COMMUNICATIONS IN JAPAN, PART I - COMMUNICATIONS, SCRIPTA TECHNICA. NEW YORK, US, vol. 80, no. 12, 1 December 1997 (1997-12-01), pages 58-67, XP000739128 ISSN: 8756-6621

## Description

### FIELD OF THE INVENTION

This invention relates to wireless communications. In particular it relates to avoiding interference in a Bluetooth^{®} compliant device.

### BACKGROUND

Bluetooth^{®} is a wireless protocol used by wireless local area networks (WLANs) operating in the 2.4 GHz (2.4 to 2.483 GHz) unlicensed radio frequency (RF) industrial scientific and medical (ISM) band. Bluetooth^{®} uses 79, 1 MHz wide channels in the 2.4 GHz band. Bluetooth^{®} protocols are described in "Specification of the Bluetooth^{®} System: Core Version 1.1", published February 22, 2001 by the Bluetooth^{®} Special Interest Group Inc.

In order to avoid interference from other devices operating in the 2.4 GHz band, Bluetooth^{®} uses a channel hopping method to hop over the 79 channels. Thus, on average Bluetooth^{®} devices occupy a 79 MHz bandwidth, but at any given moment each device only occupies a 1 MHz bandwidth. Each of the channel hops goes to a slot that is 625 microseconds long, (packets will last between 1, 3, or 5 slots, but the hop frequency remains the same for each packet). The hopping sequence allows multiple Bluetooth^{®} piconets (networks) to coexist simultaneously.

However, the 2.4 GHz band may be populated with signals from other known compliant devices that may be operating in the 2.4 GHz band. If the signals are of the same frequency as a Bluetooth^{®} channel then they will interfere with the Bluetooth^{®} signals on the Bluetooth^{®} channel and may be of sufficient duration and strength to cause packet losses on the Bluetooth^{®} channel, notwithstanding the channel hopping.
EP 1220499 discloses a system for performing an interference assessment of channels common to an 802.11b LAN and a Bluetooth terminal by analyzing channels having progressively increasing and decreasing channel frequencies respectively.

### BRIEF DESCRIPTION OF THE DRAWINGS

Figure 1 shows a flowchart of operations performed by a receiver in accordance with one embodiment of the invention;

Figure 2 shows one embodiment of a sequence table; and

Figure 3 shows a high level block diagram of one embodiment of a receiver in accordance with the invention.

### DETAILED DESCRIPTION

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

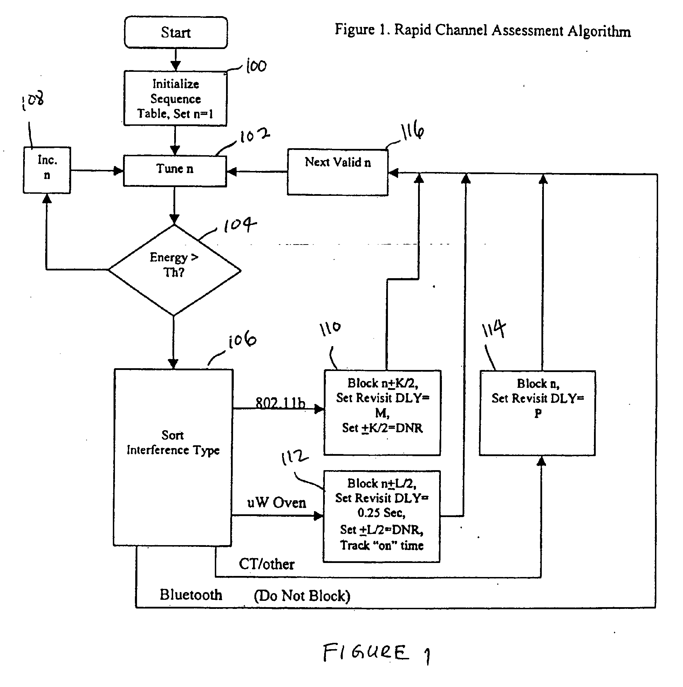

Figure 1 of the drawings shows a flow chart of operations performed in accordance with one embodiment of the invention. The operations shown in Figure 1 are performed by a Bluetooth^{®} receiver in order to assess interference levels on the 79 Bluetooth^{®} channels and to block those channels where the interference levels are high. (Blocking may consist of re-mapping the Bluetooth^{®} frequency hop sequence in a manner that avoids using channels classified as bad by these algorithms. The Bluetooth^{®} Special Interest Group delineates methods to re-map the frequency hop pattern in their AFH algorithm for example). In this manner packet losses due to interference from other devices operating in the 2.4 GHz band may be reduced. Thus broadly, the operation shown in Figure 1 disclose a technique in which a channel assessment of predefined communication channels in the form of the 79, 1 MHz Bluetooth^{®} channels, each centered on a particular frequency within a frequency band (the 2.4 GHz frequency band) is performed. The channel assessment comprises determining if interference on each predefined channel is above a predefined energy threshold. The channel assessment involves visiting the predefined communication channels in a predefined sequence in which those channels in which interference is likely from specific types of interferers known to operate in the 2.4 GHz frequency band are visited first. Thereafter, those communications channels on which interference above the predefined energy threshold is detected are disabled or avoided.

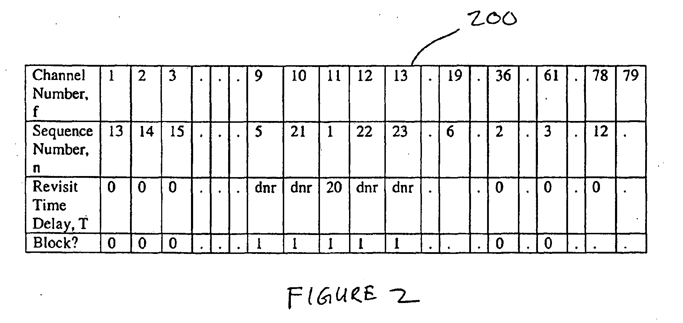

Referring to Figure 1, at block 100 the predefined sequence is initialized which includes loading a frequency sequence table into memory and assigning a value of 1 to a counter n. Figure 2 of the drawings shows an example of a frequency sequence table 200. The purpose of the frequency sequence table 200 is to map a sequence number n to a channel number f. Sequence numbers are integers in the range of 1 to 79 and specify an order in which the Bluetooth^{®} channel numbers f are to be visited. For example, in the case of the table 200, sequence number n=1 is assigned to channel number f=11, sequence number n=2 is assigned to channel number f=36, and sequence number n=3 is assigned to channel number f=61. Thus, the predefined sequence of visiting the 79 Bluetooth channels in the case of the table 200 comprises visiting channel 11 first, channel 36 second, channel 61 third, etc.

It turns out that Bluetooth^{®} channel 11 has a center frequency that is the same frequency of channel 1 of the WLAN protocol known as the 802.11b, channel number 36 has a center frequency which is also the center frequency of channel 6 of the 802.11 b protocol, and Bluetooth^{®} channel 61 has a center frequency that is also the center frequency of 802,11 b channel 11.

The 802.11 b standard uses a 22 MHz portion of the 2.4 GHz band. This 22 MHz portion is divided into 11 to 14 channel center frequencies depending upon the country of deployment. For example, in the US, 11 channels are used with three of them being most likely due to their non-overlapping nature. The three non-overlapping channels recommended by the Institute of Electrical and Electronic Engineers in (IEEE) in the US, are channels 1, 6, and 11.

Thus, it will be seen that the sequence table 200 shown in Figure 2 will cause a Bluetooth^{®} device to initiate a sequence in which to visit each of the Bluetooth^{®} channels in order to perform a channel assessment in which the Bluetooth^{®} channel having a center frequency in common with 802.11 b channel 1 would be visited first, the Bluetooth^{®} channel having a center frequency which coincides with the center frequency of 802.11 b channel 6 which would be visited second, and the Bluetooth^{®} channel having a channel center frequency which is the same as the channel center frequency of 802.11 b channel 11 would be visited third. In other words, the table 200 defines a sequence in which the 79 Bluetooth channels are to be visited, wherein the most likely 802.11 b channel in use in a particular area will be visited first. The significance of this is that 802.11 b interferers most likely to be operating in the 2.4 GHz band will be identified first without having to perform an exhaustive search of all channels. It will be appreciated that one advantage of the predefined search sequence shown in Figure 2, is that it allows the rapid identification of interference caused by 802.11 b interferers so that bad channels, i.e. channels on which 802.11 b interference is being received above a predefined energy threshold can be rapidly eliminated from the channel hopping sequence. Thus, the rapid detection and evaluation of 802.11 b interference will result in fewer packet losses and thus lower packet error rates in Bluetooth^{®} communications.

Turning again to Figure 1 of the drawings, at 102 the Bluetooth^{®} receiver is tuned to the frequency of the Bluetooth^{®} channel assigned to the sequence number n, which in a first pass through the operation shown in Figure 1 of the drawings, will be the channel 11. At block 104, the energy level of signals received on the tuned channel, i.e. channel 11, is measured, and if the energy level is found to be above a predefined threshold then block 106 is executed. If, however it is determined at block 104, that the energy level of the received signals on the tuned channel, i.e. channel 11, is below the predefined threshold then block 108 is executed, wherein the sequence number n is incremented. As will be seen from Figure 1, after execution of block 108, block 102 is re-executed. In one embodiment, the predefined energy level is selected to provide a good indication of when an interference signal is present on the tuned channel. Thus, in one embodiment, the predefined energy threshold is set to be about 10 dB above the sensitivity of the Bluetooth^{®} receiver.

In block 106 operations are performed to sort the interference on the tuned channel, i.e. channel 11, by source type. In one embodiment, the source type includes 802.11 b interferers, microwave ovens, and cordless telephones operating in the 2.4 GHz band. At block 110, if the interference is determined to be interference from an 802.11 b source, the Bluetooth^{®} channel number f that is mapped to the sequence number n is blocked. Once blocked, a Bluetooth^{®} channel is not available for selection during channel hopping. In one embodiment, blocking the Bluetooth^{®} channel mapped to the sequence number n involves transmitting the channel to be blocked to a master unit for the particular piconet within which the Bluetooth^{®} receiver is operating.

In a further embodiment, and as an optimization to increase the speed at which "bad channels" are eliminated from selection during channel hopping, all neighbouring Bluetooth^{®} channels within a range of K/2 of the Bluetooth^{®} channel mapped to the sequence number n are automatically blocked without actually visiting those channels. The value for K is set at 22 MHz which represents the maximum bandwidth of an 802.11 b signal. Thus, in the case of sequence number n being 1, Bluetooth^{®} channel 11 which is mapped to sequence number n=1 (see Figure 2 of the drawings) will be blocked. Additionally, channels 1 through 22 will also be blocked, without actually having visited those channels, since those channels are located within the range of 11 MHz from channel 11. The rationale behind blocking these channels without actually visiting them is that since an 802.11 b signal can be up to 22 MHz wide, it follows that these channels could also be receiving 802.11 b interference signals.

In one embodiment, the operations at block 110 further comprise setting a revisit delay after which the tuned channel corresponding to sequence number n is to be revisited. For example, in the case of table 200 of Figure 2, it will be seen that the revisit delay for channel number 11 is set to 20 microseconds. The purpose of the revisit delay is to ensure that a particular blocked channel is revisited after the delay period in order to reassess the channel and to possibly unblock the channel if interference on that channel is below the predefined energy threshold. In one embodiment, all blocked channels are assigned a value of 1 and all unblocked channels are assigned a value of 0, as can be seen in table 200 of Figure 2. Channels that have been blocked without actually visiting them are assigned a "do not revisit" (DNR) tag which indicates that these channels are not to be revisited. The reason is that there is no need to revisit these channels since these channels may be automatically unblocked if the channel f at the center of these channels is unblocked when it is revisited.

At block 112 a sequence of operations is performed if at 106 it is determined the source of interference is a microwave oven operating in the 2.4 GHz frequency band. The particular operations that are performed at block 112 are based on the operating characteristics of microwave ovens operating in the 2.4 GHz band. Generally, it has been found that microwave ovens operating in this band operate at a 50% duty factor. Further, the timing is such that interference may be present then absent for several seconds. The spectral spread of microwave ovens emissions can be wide and unpredictable with large frequency drift over time. Thus, when a microwave oven signal is detected, on a particular Bluetooth^{®} channel, other Bluetooth^{®} channels located a certain distance from the particular Bluetooth^{®} channel are automatically blocked. This is because interference from the microwave oven is also expected on these channels because of the large frequency drift over time of the microwave oven's signal. In one embodiment, it is assumed that microwave oven's signals will drift within a L MHz band, which in one embodiment is set at 10 MHz. Thus, if for example, a microwave oven's signal is detected on Bluetooth^{®} channel 13 then all channels located 10/2 MHz channels away from this channel will automatically be blocked. Thus, channels 8 to 18 will automatically be blocked. In one embodiment, a revisit delay, for microwave oven signals is set at 0.25 seconds. Further, all channels located within a range of U2 MHz from the channel mapped to the sequence number n on which microwave oven interference was detected are marked with a "do not revisit" (DNR) tag. As in the case of the 802.11 b signals, the theory here is that these channels located U2 MHz away from the channel on which microwave oven interference was detected are automatically blocked without having to visit them because microwave drift over time will be present in these channels and further they do not need to be revisited since they may be unblocked by revisiting and reassessing the channel on which microwave oven interference was detected in the first place.

In one embodiment, and as an optimization to increase the number of Bluetooth^{®} channels that may be used simultaneously in the presence of an interfering microwave oven in the 2.4 GHz band, the "on" time of the microwave oven is tracked. This allows the Bluetooth channels on which there is microwave oven interference to be blocked only during those periods that the microwave oven is actually transmitting interference. Since a microwave oven generally has a duty cycle of 50% this means that microwave oven signals will be detected on a Bluetooth^{®} channel in a pattern in which the signal is on 50% of the time and off 50% of the time. Thus, by being able to track the "on" time, these channels do not need to be blocked completely but rather they are blocked only for a limited duration. This makes it possible to still use these channels during periods of the microwave oven duty cycle where there is no interference.

If at block 106 the origin of the interference is found to be a cordless telephone operating in the 2.4 GHz band, then block 114 is executed. Generally cordless telephones operating in the 2.4GHz band use a narrow band frequency modulation (FM) or digital FM modulation, or a direct sequence modulation technique. In some cases time division duplex and time division multiple access techniques may be used. In other cases, frequency division techniques may be used with one link in the 2.4 GHz band and another located in the 900 MHz ISM band. The center frequencies of cordless telephones are usually fixed. Thus, in one embodiment of the present invention, a sequential search of the entire 2.4 GHz band is performed to find these cordless device emissions. Once located, the channels on which the emissions were located are avoided. These channels are stored in memory and checked on a regular basis. Thus, the operations at block 114 include firstly blocking the Bluetooth^{®} channel corresponding to the sequence number n for which the interference was received, and secondly setting a revisit delay period P, after which the channel corresponding to the sequence number n that was just blocked is revisited, to reassess the channel and to possibly unblock it. In one embodiment P is set equal to value 1 second.

After execution of blocks 110, 112 and 114, block 116 is executed wherein a next sequence number n is obtained from the table 200. After execution of block 116, block 102 is re-executed.

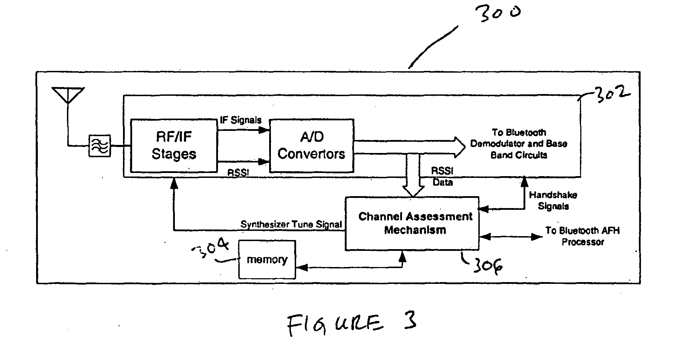

Figure 3 of the drawings shows a high level block diagram of one embodiment of a Bluetooth^{®} receiver that may be used to perform the channel assessment technique described above. As will be seen, the receiver 300 includes a receiver section 302 which can be tuned to receive signals on the Bluetooth^{®} channel frequencies. Components of the receiver section 302 include a radio frequency (RF) and an intermediate frequency (IF) stage, analog to digital (A/D) converters, etc. The exact components that make up receiver section 302 have not been shown as these will be known to one skilled in the art. The receiver 300 further includes a memory 304 which stores a predefined sequence, such as the sequence shown in table 200 in Figure 2 of the drawings, in which the receiver section is to be tuned to the predefined communications channel.
Further, the receiver 300 includes a channel assessment mechanism 306 to perform a channel assessment of the predefined communications channels in a manner described above. The channel assessment mechanism may be implemented in hardware, software or in firmware, in accordance with different embodiments of the invention.

Execution of the operations shown in Figure 1 of the drawings provides a rapid mechanism to assess each of the 79 Bluetooth^{®} channels to identify good channels with acceptable interference levels and bad channels with unacceptable interference levels. Bad channels are blocked so that they are unavailable for channel hopping. A particular advantage of the operations shown in Figure 2 of the drawings is that instead of performing an exhaustive search of all 79 Bluetooth^{®} channels, knowledge of specific types of interferers operating in the 2.4 GHz band is used in order to tailor the channel assessment technique to rapidly locate the specific interferers. The rapid evaluation of the Bluetooth^{®} spectrum translates to fewer packet collisions and thus lower packet error rates for Bluetooth^{®} and the interfered/interfering technologies.

Although the present invention has been described with reference to specific exemplary embodiments, it will be evident that the various modification and changes can be made to these embodiments without departing from the broader spirit of the invention as set forth in the claims. Accordingly, the specification and drawings are to be regarded in an illustrative sense rather than in a restrictive sense.

## Claims

1. A method for wireless communication co-existence; the method comprising:
performing a channel assessment of predefined communications channels each centred on a particular frequency within a frequency band, the channel assessment comprising determining (104) if interference on each predefined channel is above a predefined energy threshold, **characterised by** the predefined communications channels being visited in a predefined sequence in which those channels in which interference from specific types of interferers known to operate in the frequency band is likely are visited first; and
disabling (110, 112, 114) those communications channels on which interference above the predefined energy threshold is detected.

2. The method of claim 1, wherein the frequency band is the 2.4 GHz band.

3. The method of claim 1, wherein the specific types of interferes are selected from the group consisting of 802.11x transmitters, microwave ovens, and cordless telephones.

4. The method of claim 1, wherein the predefined communications channels comprise 79, 1 MHz channels in the industrial, scientific and medical (ISM) 2.4 GHz band.

5. The method of claim 3, further comprising classifying interference above the predefined threshold as being from a specific type of interferer.

6. The method of claim 1, wherein the predefined energy threshold is a number based on a sensitivity of a transceiver used to perform the channel assessment.

7. The method of claim 1, wherein the predefined sequence comprises first tuning to the predefined channel centre frequencies that are also channel frequencies for an 802.11x compliant transceiver.

8. The method of claim 7, wherein if interference above the predefined threshold is detected from an 802.11x compliant transceiver on a particular predefined channel then the disabling comprises disabling those predefined channels that have a centre frequency within a frequency band centred on a predefined channel and K MHz wide without visiting those predefined channels.

9. The method of claim 8, wherein K is 22 MHz.

10. The method of claim 6, wherein if interference above the predefined threshold is detected from a microwave oven on a particular predefined channel, then the disabling comprises disabling those predefined channels that have a centre frequency within a frequency band centred on the predefined channel and L MHz wide, without visiting those predefined channels.

11. The method of claim 10, wherein L is 10 MHz.

12. The method of claim 1, further comprising revisiting a disabled communications channel after a predetermined delay in order to reassess the channel.

13. The method of claim 12, further comprising enabling a disabled communications channel if it no longer has interference above the predefined energy threshold.

14. The method of claim 12, wherein only those disabled channels that were visited before being disabled are revisited.

15. The method of claim 5, further comprising measuring a duty cycle of microwave oven interference, the disabling then comprising disabling only during on periods in the duty cycle.

16. A receiver (300) comprising a receiver section to receive signals on predefined communications channels, each centred on a particular frequency within a frequency band and a memory (304) to store a predefined sequence in which the receiver section is to be tuned to the predefined communications channels; the receiver being **characterized by**:
a channel assessment mechanism (306) to perform a channel assessment of the predefined communications channels, the channel assessment comprising determining if interference on each predefined communications channel is above a predefined energy threshold, wherein the predefined communications channels are visited in the predefined sequence and further wherein a channel having interference that exceeds the predefined energy threshold is disabled,
wherein the predefined sequence comprises those predefined channels in which interference from specific types of interferers known to operate in the frequency band is likely are visited first.

17. The receiver of claim 16, wherein the channel assessment mechanism (306) further comprises a channel disabling mechanism to disable those communications channels on which interference above the predefined energy threshold is detected.

18. The receiver of claim 16, wherein the frequency band is a 2.4 GHz band.

## Patentansprüche

1. Verfahren für die Koexistenz der kabellosen Kommunikation, wobei das Verfahren folgendes umfasst:
das Ausführen einer Kanalbeurteilung vordefinierter Kommunikationskanäle, die jeweils auf eine bestimmte Frequenz in einem Frequenzband zentriert sind, wobei die Kanalbeurteilung die Bestimmung (104) umfasst, ob eine Interferenz in jedem vordefinierten Kanal über einem vordefinierten Energieschwellenwert liegt, **dadurch gekennzeichnet, dass** die vordefinierten Kommunikationskanäle in einer vordefinierten Folge besucht werden, wobei die Kanäle zuerst besucht werden, bei denen die Interferenz von bestimmten Arten von Störquellen wahrscheinlich ist, für die bekannt ist, dass sie innerhalb des Frequenzbereichs arbeiten; und
das Deaktivieren (110, 112, 114) der Kommunikationskanäle, in denen eine Interferenz oberhalb des vordefinierten Energieschwellenwerts detektiert wird.

2. Verfahren nach Anspruch 1, wobei es sich bei dem Frequenzband um das 2,4-GHz-Band handelt.

3. Verfahren nach Anspruch 1, wobei bestimmte Arten von Störquellen aus der Gruppe ausgewählt werden, die 802.11x-Sender, Mikrowellenöfen und schnurlose Telefone umfasst.

4. Verfahren nach Anspruch 1, wobei die vordefinierten Kommunikationskanäle 79,1-MHz-Kanäle in dem ISM-2,4-GHZ-Band (ISM = Industrial, Scientific, Medical) umfassen.

5. Verfahren nach Anspruch 3, wobei dieses ferner die Klassifizierung der Interferenz oberhalb des vorbestimmten Schwellenwertes als eine bestimmte Art von Störquelle umfasst.

6. Verfahren nach Anspruch 1, wobei der vordefinierte Energieschwellenwert einen Wert auf der Basis der Empfindlichkeit eines Transceivers darstellt, der zur Ausführung der Kanalbeurteilung verwendet wird.

7. Verfahren nach Anspruch 1, wobei die vordefinierte Folge zuerst das Anpassen der vordefinierten Kanalmittenfrequenzen umfasst, die auch Kanalfrequenzen für einen 802.11x-kompatiblen Transceiver umfasst.

8. Verfahren nach Anspruch 7, wobei wenn eine Interferenz oberhalb des vordefinierten Schwellenwerts von einem 802.11x-kompatiblen Transceiver in einem bestimmten vordefinierten Kanal detektiert wird, das Deaktivieren das Deaktivieren der vordefinierten Kanäle umfasst, die eine Mittenfrequenz innerhalb des Frequenzbands aufweisen, das auf einem vordefinierten Kanal zentriert und K MHz breit ist, ohne dass diese vordefinierten Kanäle besucht werden.

9. Verfahren nach Anspruch 8, wobei K gleich 22 MHz ist.

10. Verfahren nach Anspruch 6, wobei wenn eine Interferenz oberhalb des vordefinierten Schwellenwerts von einem Mikrowellenofen in einem bestimmten vordefinierten Kanal detektiert wird, das Deaktivieren das Deaktivieren der vordefinierten Kanäle umfasst, die eine Mittenfrequenz innerhalb des Frequenzbands aufweisen, das auf einem vordefinierten Kanal zentriert und L MHz breit ist, ohne dass diese vordefinierten Kanäle besucht werden.

11. Verfahren nach Anspruch 10, wobei L gleich 10 MHz ist.

12. Verfahren nach Anspruch 11, wobei dieses ferner das erneute Besuchen eines deaktivierten Kommunikationskanals nach einer vorbestimmten Verzögerung umfasst, um den Kanal erneut zu beurteilen.

13. Verfahren nach Anspruch 12, wobei dieses ferne das Freigeben eines deaktivierten Kommunikationskanals umfasst, wenn dieser keine Interferenz oberhalb des vordefinierten Energieschwellenwerts mehr aufweist.

14. Verfahren nach Anspruch 12, wobei nur die deaktivierten Kanäle, die vor der Deaktivierung besucht worden sind, erneut besucht werden.

15. Verfahren nach Anspruch 5, wobei dieses ferner das Messen eines Arbeitszyklus der Mikrowellenofeninterferenz umfasst, wobei das Deaktivieren das Deaktivieren nur während Einschaltperioden in dem Arbeitszyklus umfasst.

16. Empfänger (300), der einen Empfängerabschnitt für den Empfang von Signalen in vordefinierten Kommunikationskanälen umfasst, die jeweils auf eine bestimmte Frequenz innerhalb eines Frequenzbands zentriert sind, und mit einem Speicher (304) zum Speichern einer vordefinierten Folge, in welcher der Empfängerabschnitt auf die vordefinierten Kommunikationskanäle abgestimmt wird; wobei der Empfänger **gekennzeichnet ist durch**:
einen Kanalbeurteilungsmechanismus (306) zur Ausführung einer Kanalbeurteilung der vordefinierten Kommunikationskanäle, wobei die Kanalbeurteilung die Bestimmung umfasst, ob die Interferenz in jedem vordefinierten Kommunikationskanal oberhalb eines vordefinierten Energieschwellenwertes liegt, wobei die vordefinierten Kommunikationskanäle in der vordefinierten Folge besucht werden, und wobei ferner ein Kanal deaktiviert wird, der eine Interferenz aufweist, die den vordefinierten Energieschwellenwert überschreitet, wobei die vordefinierte Folge die vordefinierten Kanäle umfasst, wobei die Kanäle zuerst besucht werden, bei denen die Interferenz von bestimmten Arten von Störquellen wahrscheinlich ist, für die bekannt ist, dass sie innerhalb des Frequenzbereichs arbeiten.

17. Empfänger nach Anspruch 16, wobei der Kanalbeurteilungsmechanismus (306) ferner einen Kanaldeaktivierungsmechanismus umfasst, um die Kommunikationskanäle zu deaktivieren, in denen eine Interferenz oberhalb des vordefinierten Energieschwellenwertes detektiert wird.

18. Empfänger nach Anspruch 16, wobei es sich bei dem Frequenzband um ein 2,4-GHz-Band handelt.

## Revendications

1. Procédé pour la coexistence de communications sans fil, le procédé comprenant les étapes consistant à :
effectuer une évaluation de canal de canaux de communication prédéfinis, chacun étant centré sur une fréquence donnée dans une bande de fréquences, l'évaluation de canal comprenant l'étape consistant à déterminer (104) si une interférence sur chaque canal prédéfini est supérieure à un seuil d'énergie prédéfini, **caractérisé en ce que** les canaux de communications prédéfinis sont visités dans une séquence prédéfinie dans laquelle les canaux dans lesquels une interférence provenant de types spécifiques d'émetteurs brouilleurs connus pour fonctionner sur la bande de fréquences est probable sont visités en premier; et
désactiver (110, 112, 114) les canaux de communications sur lesquels une interférence supérieure au seuil d'énergie prédéfini est détectée.

2. Procédé selon la revendication 1, dans lequel la bande de fréquences est la bande 2.4 GHz.

3. Procédé selon la revendication 1, dans lequel les types spécifiques d'émetteurs brouilleurs sont choisis dans le groupe comprenant les émetteurs 802.11x, fours à micro-ondes, et téléphones sans fil.

4. Procédé selon la revendication 1, dans lequel les canaux de communication prédéfinis comprennent 79 canaux de 1 MHz dans la bande industrielle, scientifique et médicale (ISM) 2.4 GHz.

5. Procédé selon la revendication 3, comprenant en outre la classification de l'interférence supérieure au seul prédéfini comme étant à partir d'un type spécifique d'émetteur brouilleur.

6. Procédé selon la revendication 1, dans lequel le seuil d'énergie prédéfini est un nombre basé sur une sensibilité d'un émetteur-récepteur utilisé pour effectuer l'évaluation du canal.

7. Procédé selon la revendication 1, dans lequel la séquence prédéfinie comprend tout d'abord le réglage sur les fréquences centrales du canal prédéfini qui sont également les fréquences de canal pour un émetteur-récepteur compatible 802.11x.

8. Procédé selon la revendication 7, dans lequel si une interférence supérieure au seuil prédéfini est détectée à partir d'un émetteur-récepteur compatible 802.11x sur un canal prédéfini donné, alors la désactivation comprend l'étape consistant à désactiver les canaux prédéfinis qui ont une fréquence centrale dans une bande de fréquences centrée sur un canal prédéfini et large de K MHz sans visiter ces canaux prédéfinis.

9. Procédé selon la revendication 8, dans lequel K est 22 MHz.

10. Procédé selon la revendication 6, dans lequel si une interférence supérieure au seuil prédéfini est détectée à partir d'un four à micro-ondes sur un canal prédéfini donné, alors la désactivation comprend l'étape consistant à désactiver les canaux prédéfinis qui ont une fréquence centrale dans une bande de fréquences centrée sur un canal prédéfini et large de L MHz, sans visiter ces canaux prédéfinis.

11. Procédé selon la revendication 10, dans lequel L est 10 MHz.

12. Procédé selon la revendication 1, comprenant en outre l'étape consistant à revisiter un canal de communication désactivé après un retard prédéterminé afin de réévaluer le canal.

13. Procédé selon la revendication 12, comprenant en outre l'étape consistant à activer un canal de communication désactivé s'il n'a plus d'interférence au-dessus du seuil d'énergie prédéfini.

14. Procédé selon la revendication 12, dans lequel seuls les canaux désactivés visités avant d'être désactivés sont revisités.

15. Procédé selon la revendication 5, comprenant en outre l'étape consistant à mesurer un cycle d'utilisation d'une interférence de four à micro-ondes, la désactivation comprenant alors la désactivation uniquement pendant des périodes du cycle d'utilisation.

16. Récepteur (300) comprend une section réceptrice pour recevoir des signaux sur des canaux de communication prédéfinis, chacun étant centré sur une fréquence particulière dans une bande de fréquences et une mémoire (304) pour stocker une séquence prédéfinie dans laquelle la section réceptrice doit être réglée sur les canaux de communications prédéfinis ; le récepteur étant **caractérisé par** :
un mécanisme d'évaluation de canal (306) pour réaliser une évaluation de canal des canaux de communication prédéfinis, l'évaluation de canal comprenant l'étape consistant à déterminer si une interférence sur chaque canal de communication prédéfini est supérieure à un seuil d'énergie prédéfini, dans lequel les canaux de communications prédéfinis sont visités dans la séquence prédéfinie et en outre dans lequel un canal ayant une interférence qui dépasse le seuil d'énergie prédéfini est désactivée, dans lequel la séquence prédéfinie comprend les canaux prédéfinis dans lesquels une interférence provenant des types spécifiques d'émetteurs brouilleurs connus pour fonctionner sur la bande de fréquences est probable, sont visités en premier.

17. Récepteur selon la revendication 16, dans lequel le mécanisme d'évaluation de canal (306) comprend en outre un mécanisme de désactivation de canal pour désactiver les canaux de communications sur lesquels une interférence supérieure au seuil d'énergie prédéfini est détectée.

18. Récepteur selon la revendication 16, dans lequel la bande de fréquences est une bande 2,4 GHz.
